# EUROPEAN PATENT APPLICATION

(11) **EP 1 213 878 A2**
(43) Date of publication of application: **12.06.2002**
(21) Application number: 01403117.3
(22) Date of filing: 05.12.2001
(51) Int. Cl.: H04L 12/28, H04L 29/06

(54) **Method and system for protocol conversion**

(30) Priority: 06.12.2000 AU 7205300
(71) Applicant: ALCATEL, 75008 Paris (FR)
(72) Inventor: Johan, Ronald, Bondi Junction, New South Wales 2022 (AU); Underwood, Grant James, Gymea Bay, New South Wales 2227 (AU); Leece, Philip Donald, Oatley, New South Wales 2223 (AU)
(74) Representative: Feray, Valérie

(57) **Abstract**

This invention enables various types of equipment using different protocols to be multiplexed on to a two-wire line carrying traffic with a predetermined protocol. Transmissions from equipment which uses separate information and signalling channels are multiplexed on to a single channel of the predetermined protocol with the signalling incorporated in to the channel by the use of bit-robbing techniques.

This enables several different types of equipment to be connected via a single pair to the network access point, permitting standardization of the line cards in the access equipment.

## Description

### Technical Field

This invention relates to a method and arrangement for handling different types of transmission protocols in a communication network, and is applicable to the provision of one or more telecommunication services to a customer over a copper pair. The invention is particularly advantageous where the services use different protocols. In a particular embodiment, the invention can reduce the number of copper pairs required where one of the services normally requires more than one copper pair.

Where there are different types of equipment using different protocols which can be connected to a network, it is necessary to make provision for handling these different protocols at the point of access to the network. This means that, for each type of protocol, a different type of line circuit is required. Because it is not possible to anticipate the exact number of each type of line circuit required at any access point, the network operator must make provision for several different protocols by providing redundant line circuits for each protocol. This is wasteful of resources requiring idle rack space and increased inventory.

### Background Art

Some telecommunication carrier customers have a substantial investment in current equipment such as ISDN, P-Phone, analog leased line, data. Some of these applications use 4 wire or 6 wire lines.

The introduction of ADSL and other XDSL services broadband communication available over a copper pair. Broadband access over a copper pair can be made feasible by reducing the length of copper to a length capable of sustaining the broadband communication signals. This can be achieved by extending the point of access to the network beyond the exchange to multiplexers placed closer to the customers. However, the customer may face substantial costs in discarding current equipment and replacing it with new equipment designed to utilize the equipment.

Telecommunication carriers also face problems with the increased demand for copper pairs, driven in large part by the growth of the Internet. The challenge for the carriers is to be able to carry the increased demand without having to install the large quantities of extra copper.

US Patent No. 6028867 (Covad) describes an arrangement for providing IDSL communication to all subscribers of a provider, and optionally providing ADSL where the line length is within the limit for ADSL service. However this patent does not address the problem of maintaining legacy services. Rather, it supposes the use of end user equipment adapted to the transmission protocol. The access multiplexers described by Covad are located at a central office and are fitted with different modules for dealing with IDSL and with ADSL. This need for different types of modules is expensive, requires larger inventions, and wastes space in the access multiplexer racks.
A business phone system may include one or more subsets accessing central facilities, such as in the Centrex system. The subsets are usually "dumb" terminals connected to the 2-wire line. In one system voice or data may be transferred over the normal voice frequency band, and signalling and control may be exchanged via an out-of band channel. The normal phone operations, such as OFF-HOOK, ON-HOOK, dial signalling etc are sent as signalling in the out-of-band channel, as are requests for exchange-based facilities and associated control signals. The out-of-band channel may have a data rate of the order of 500 to 1000 bits/sec.

Typically the signalling may be carried out at 1 kb/s half duplex.

### Disclosure of the invention

The invention proposes the a customer interface which is capable of converting protocols of one or more than one different types of equipment to a standard protocol so that the variety of interface circuitry at the edge of the network can be reduced or even standardized to a single type of module.

In a further extension of the invention, where the subscriber equipment looks for a response to a request in a defined time window, the invention can be extended to resolve the problem that the delays introduced in the process of converting from protocol A to protocol B for the upstream signal and between protocol B and protocol A for the downstream response (or vice versa) may be too great for the subscriber unit specification, i.e, the response may fall outside the window permitted for receiving the response. To overcome this problem, the Network Termination Unit at the subscriber's premises includes an exchange emulator which responds directly to signals from the subscriber equipment.

The "dummy" response from the emulator maintains the communication with the subscriber equipment while the NTU relays the signals to the network access point and receives the response from the network access point.

According to one embodiment, the invention provides a method of converting at least first and second signals to a common protocol, the first signal having a protocol different from the common protocol, the method including,
- multiplexing the first and second signals into a bit stream having the common protocol.

Preferably, the first signal is multiplexed into the same bit stream as the second signal using bit robbing.

The invention also provides an arrangement for converting at least first and second signals to a common protocol, the first signal having a first protocol different from the common protocol, the arrangement including a multiplexer the second signal into a bit stream and incorporating the first signal into the bit stream carrying the second signal by bit robbing.

This specification also discloses a service agile communication arrangement to make available a plurality of services to a customer's premises, the arrangement including:
- at the network access side of the customer's line, a network line interface adapted to transmit and receive information and signalling according to a chosen communication protocol;
- at the customer premises side of the line, a customer line interface adapted to transmit and receive information and signalling according to the chosen communication protocol;
- the customer line interface including means to convert between the information and signalling protocol of the service and the chosen communication protocol.

Preferably the network line interface converts between the chosen protocol and a network protocol for communication with the network.

In a preferred embodiment, the chosen protocol is the 2B1Q IDSL Protocol.

The invention also envisages a customer end interface arrangement through which one or more services having corresponding protocols on the customer side are converted to or from a common protocol on the network side.

The services may be transmitted through the network using the common protocol. Alternatively, at or near the network access point, the services may be converted to or from their customer side protocols for transmission through two or more networks, each having their own protocol.

### Brief Description of the Drawings

The invention will be described with reference to the accompanying drawings, in which:
Figure 1 shows an arrangement for connecting subscriber equipment to a network over a link using a predetermined protocol.
Figure 2 shows a Network Termination Unit arrangement according to an embodiment of the invention.
Figure 3 shows an arrangement in which the messages using the common protocol are demultiplexed and routed across a network using the common protocol Figure 4 shows an embodiment of a Subscriber Termination Unit for the purpose of illustrating the inventive concept.
Figure 5 is a timing diagram illustrating a bit robbing technique implemented in an embodiment of the invention.
Figure 6 shows a signalling byte derived from the technique illustrated in Figure 5.
Figure 7 is a representation of a further embodiment of the invention.

### Best mode of carrying out the Invention

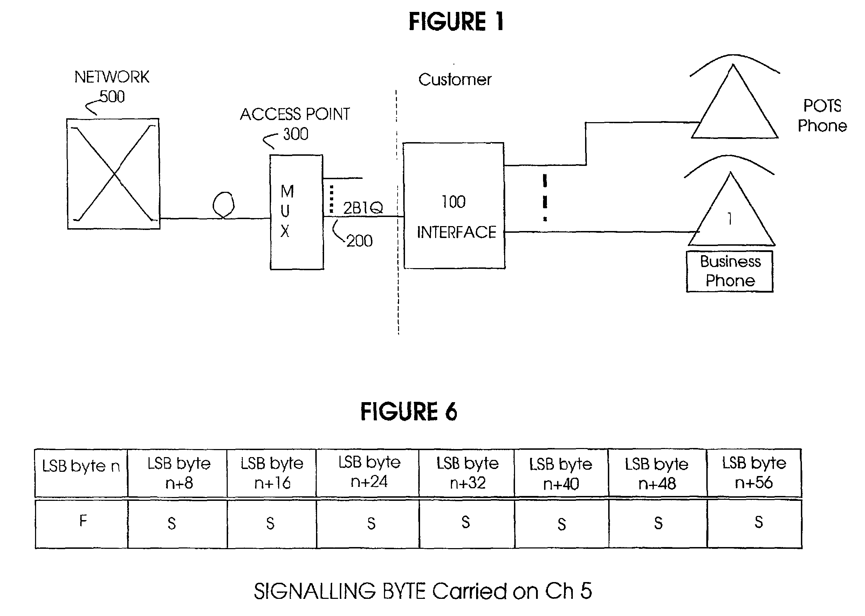

Figure 1 shows a subscriber terminal, which uses out-of-band signalling. The terminal 1 is connected to an interface 100 which converts the signalling and information (voice/data) channels from the terminals 1 to 'n' to a predetermined protocol for application to line 200 and transmission to the network access point 300. Similarly, interface 100 converts information and signalling directed to terminal 1 and received from the network using the predetermined protocol to the format used by the intended subscriber terminal 1.

The customer lines 300 carry traffic using a common protocol. This means that the racks in the Network Access Point 300 can use standard line cards.

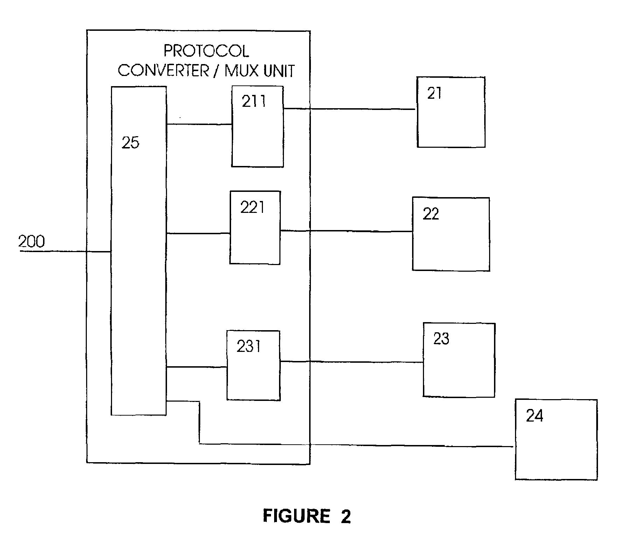

At the same time, equipment at the customer premises may implement one or more of a plurality of protocols. This is made possible by interface 100. As shown in Figure 2, there may be one or more different types of customer equipment 21 ... 24 at the customer premises, each utilizing a different protocol. Each customer equipment 21 to 23 is connected to a corresponding interface 211 to 231 which converts the communication between the common protocol used on the network side and the specific protocol required by the customer equipment. If there is a customer equipment which uses the common protocol, it does not need an interface.

On the upstream side, the interfaces 211 to 231 (and the common protocol equipment 24, if any) are connected to a multiplexer/demultiplexer 25 to multiple the upstream signals and demultiplex the downstream signals to or from line 4.

Each of the interfaces 211 to 231 is adapted to convert between the customer equipment protocols and the common protocol. The interfaces may be purpose built for a specific customer equipment protocol, or may be programmable to convert a range of customer equipment protocols.

Where the customer equipment protocol requires specific instructions which are not needed in the common protocol, these instructions are encapsulated as pseudo-data by the sending interface and converted back to instructions by the receiving interface.

In order to reconstruct individual messages and determine their destinations and usually their origins, the NTU, during the interfacing and multiplexing process, incorporates appropriate framing onto the multiplexed messages to enable the individual messages to be recognized. Conversely, incoming downstream messages include message identification information used to allocate the packets to their intended equipment.

As an example, an interface suitable for use with a small business system such as the P-Phone will be considered.

The interface includes a interface Node connected to a P-Phone by upstream and downstream VF channels and upstream and downstream signalling channels. The interface also supplies a clock.

The signalling includes the P-phone functionality such as Ring, OFF-HOOK, ON-HOOK, Hold, and other specific commands.

The P-Phone message envelope structure is in a 16 bit format carried on two 8 bit bytes as follows:

| | |
|---|---|
| Start | 1 bit |
| Direction | 1 bit |
| Address | 3bits |
| Command | 3 bits |
| Command | 5 bits |
| Repeat | 1 bit |
| Collision | 1 bit |
| Parity | 1 bit. |

On its upstream side, interface 100 is connected to a line carrying, eg, IDSL protocol, 2 X 64Kb channels plus 1 X 16Kb (2B1Q). The P-Phone VF from the customer equipment is incorporated into an 8kb/s channel of one of the 64kb/s channels and the signalling from the equipment is incorporated in the 8kb/s channels by a bit-robbing technique.

For the P-phone to operate, the local exchange is required to acknowledge the P-phone signalling within specified time limits. However the latency in converting the P-phone signals to or from the line protocol means that the P-phone system will not function properly. The intermediate line cards and signal introduce unacceptable delay between the P-phone and the network. Accordingly the network termination provides the network responses to the P-phone system.

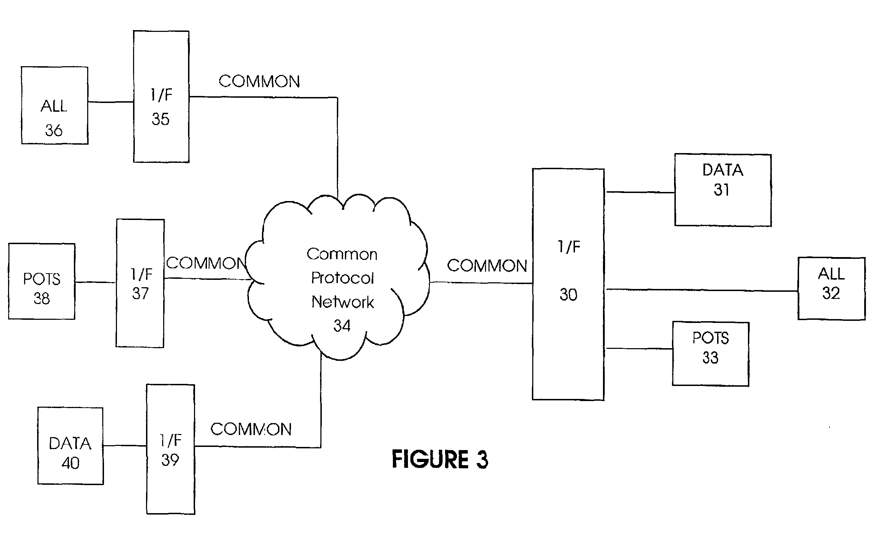

Figure 3 shows an interface 30 connecting data equipment 31, analog leased line equipment 32, and POTS equipment 33 to a COMMON protocol line. This line connects to a network 34 capable of handling the COMMON protocol. It is thus possible for the equipment 31, 32, 33 to connect to corresponding like equipment, 40, 36, and 38, via respective interfaces 39, 35 and 37.

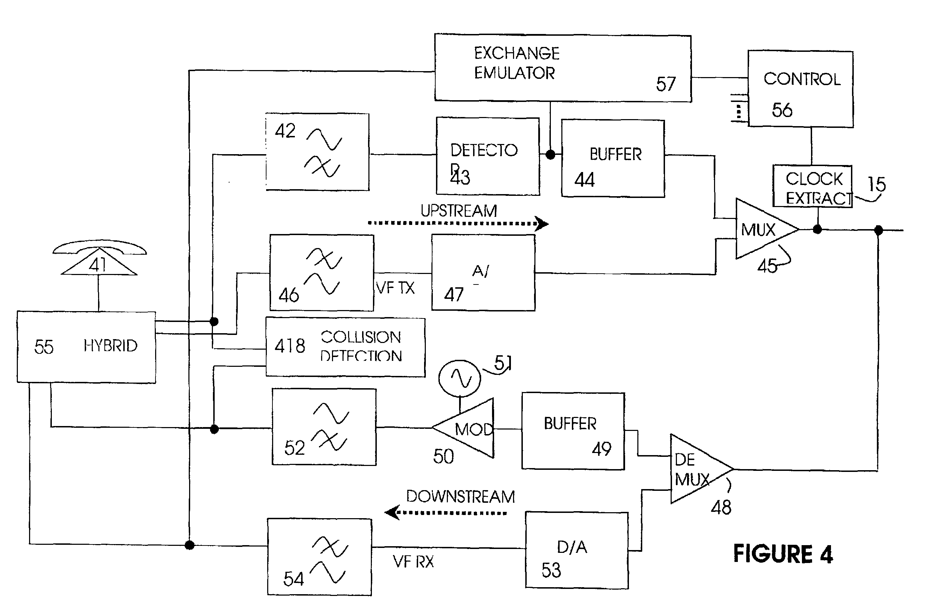

Figure 4 shows those functional elements of the embodiment of the interface which will be used in describing the invention.

The customer equipment 41 is connected to hybrid circuit arrangement 55 which acts to control the directivity of flows to and from the 2-wire line of equipment 41.

The interface 100 includes an upstream section and a downstream section.

The upstream section includes the first information path including low pass filter 46, and analog-to-digital converter 47.

In parallel with the first information path is a first signalling path including high pass filter 42, detector 43, and buffer 44.

The outputs from A/D 47 and Buffer 44 are applied to multiplexer 45 whose output is applied to line 200.

A controller 56, eg a microprocessor, controls the Buffer 44, A/D 47 and MUX 45, so that the outputs are applied to the line 200 in accordance with the predetermined protocol.

The links from controller 56 to the functional elements it controls are not shown to avoid an overly-complex drawing.

In addition, an exchange emulator 57 is responsive to signals on the first signalling path to provide the expected responses to terminal 41 to maintain the communication while the signalling is relayed to the network access point 300 and the network responses are received by the interface.

The second section of interface 100 includes a demultiplexer 48 which separates downstream signalling and information. The downstream information is applied to second information path including Digital-to-Analog converter 53 and low pass filter 54. The downstream signalling is applied to second signalling path including second Buffer 49, Modulator 50 and 51, and high pass filter 52.

Again, Controller 56 manages the demultiplexing process.

Collision detection and management functions shown figuratively as element 58, are used to manage collisions between simultaneous or overlapping upstream and downstream transmissions.

The operation of the interface will now be described in the context of an IDSL network which uses a 2 B 1Q structure, ie, 2X64 kb data channels and 1X16kb signalling channel.

While the IDSL protocol does provide a signalling channel, according to an embodiment of our invention, we incorporate the signalling into the data channel using a bit-robbing technique.

Bit robbing involves the diversion of a sequence of bits in a known pattern from carrying data to some other purpose, in this case, signalling. Where bit robbing involves the diversion of the least significant bit from some of the bytes of a channel carrying voice, the effect on the voice traffic may be within acceptable limits.

In the present example, one of the 64 kb channels will be subdivided to provide 1 X8 kb channel leaving 56kb free for other purposes.

The 8 kb/s channel will incorporate 8 bits/byte in the 64 kb/sec channel. Thus out of every 64 bits, an 8 bit byte is allocated to this channel and can be used to carry the information. We propose to use the LSB from each 1/n of these information bytes to carry the signalling, where "n" is chosen to provide a bit rate sufficient to carry the signalling. If "n" is chosen as 8, this will provide a 1 kb/s channel. If a higher signalling rate is required, "n" could be chosen eg, to be 6. This would result in a channel of approximately 1.33 kb/s, ie, stealing the LSB of every 6^{th} byte will provide a 1.33 kb/s signalling channel, whereas, if the LSB is stolen from every 8^{th} byte there will be a 1 kb/s signalling channel.

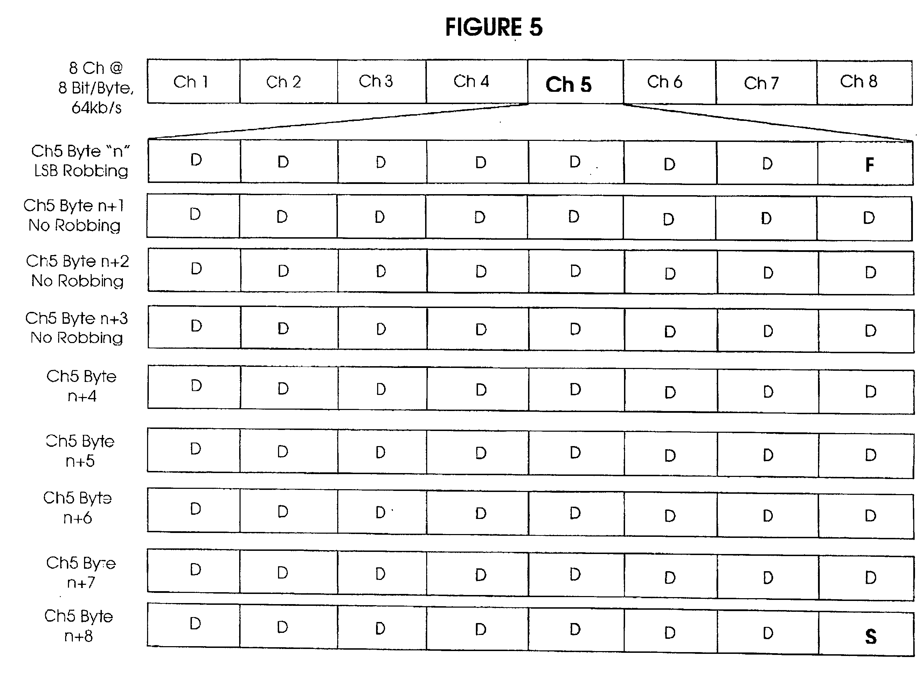

Figure 5 illustrates a application of bit robbing to a 64 kb/s channel divided into 8 channels, each byte having 8 bits. By way of illustration, channel 5 is assigned to carry the subscriber terminal traffic and the signalling is incorporated into this channel by way of bit robbing. This LSB of every 8^{th} byte is used to carry the signalling, forming a 1 kb/s channel.

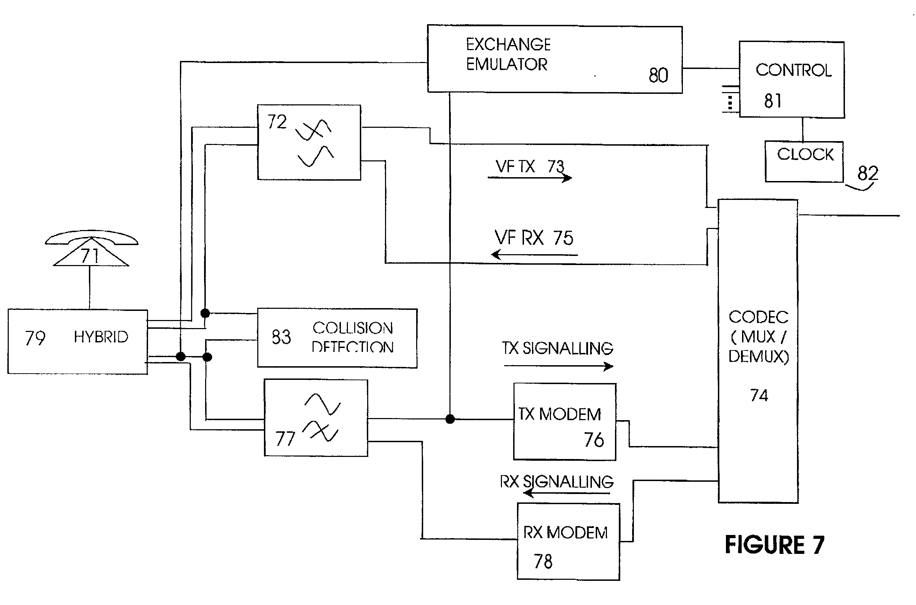

As shown in Figure 6 each of the bit robbed signalling bits in turn may be formed into 8 bit bytes ( or any other chosen format), for use in conveying the signalling information form or to the subscriber terminal.

In order to achieve frame synchronization, the first bit of each of these signalling bytes may assigned as a framing bit. The framing bit may be assigned to be, eg, always "1" or always "O". In a more advanced system the framing bits of a sequence of signalling bytes may be assigned according to the pseudo-random pattern of, say, 127 bits, to form a multiframe.

In order to initiate the transmission of the signalling message, a start of message flag is transmitted. The start of message flag is a sequence of bits chosen to alert the system that a message follows. In the idle state, the system will usually transmit all zero's or all one's, so the start of message flag will be distinct from the idle state transmission.

If we suppose that the subscriber terminal 41 uses a signalling rate of 1 kb/s, then the bit robbing channel should have the capacity to carry this data rate. However, because of the need for frame management to use, eg, 1 bit per byte, the data information carrying carrying capacity of the bit robbing channel at a clock rate of 1 kb/s is reduced proportionately. Thus the information rate would be 875 b/s, which is slower than the rate used by the subscriber terminal in this example. There are two options dealing with this. One is to increase the bit rate of the bit robbing channel to, eg, 1 bit every 6 bytes, giving a clock rate of about 1.33 kb/s. Using 1 management bit per 8 bit byte, 7/8's of this rate is 1.04 kb/s, which would be adequate for the 1 kb/s terminal signalling rate.

A second method could be used where the terminal signalling includes redundant bits or bits which are not used by the network. These bits could be discarded to reduce the bit rate required to carry the terminal signalling.

In Figure 7, the subscriber equipment 71 is connected to a hybrid circuit 79 which separates upstream and downstream flows. The transmit voice signals are filtered at 72 and passed to the line interface circuit 74, where they are converted to the line protocol and multiplexed with the transmit signalling. The transmit signalling arrives at the interface 74 via the hybrid 79, BPF or HPF filter 77, and transmit modem 76, before being multiplexed with the transmit voice signal.

In the downstream direction, interface 74 separates and converts to VF the downstream (received) voice from the received signalling. The received voice is filtered and sent to the subscriber equipment 71 via filter LPF 72. The received signalling is separated from the received voice and applied to the receive modem 78, and via the filter 77 to hybrid 79 from whence it is sent to equipment 71.

Exchange emulator 80 responds to signalling from the equipment 71 to maintain the communication session until the end of session is signalled by the equipment or otherwise terminat ed, eg, from the network side.

While the invention has been described particularly with reference to a business phone using out of band signalling, such as the Nortel Meridian or P-Phone, the principles of the invention can equally be applied to other terminal equipment.

For example, a POTS telephone could be multiplexed onto the preferred protocol line in a similar fashion. The voice signals would be converted in a similar manner to the business phone voice signals. A detector arrangement would detect the status of the POTS subset, so that the detector would recognize the various signals from the subset, and convert them into code for multiplexing with the voice signal.

## Claims

1. A method for converting a communication in a first communication protocol to a second protocol,
- the first protocol including information and signalling,
- the method including:
converting the information into a digital stream, and
incorporating the signalling in the digital stream using bit-robbing.

2. A method as claimed in claim 1 wherein the signalling is carried on a signalling channel, different channel from the information channel carrying information.

3. A method as claimed in claim 1 or 2 wherein the information is in the voice band channel and the signalling is an out-of-band channel.

4. A method as claimed in claim 1 or claim 1, wherein the information is in the form of analog signals and the signalling is in the form of digital signal.

5. An arrangement for converting a communication in a first protocol to a second protocol,
- the communication including information and signalling,
- the arrangement including a splitter arrangement separating the information onto a first information path, and the signalling onto a first signalling path, and
- a multiplexer arrangement applying the information to a digital stream and incorporating the signalling into the digital stream by bit-robbing.

6. An arrangement as claimed in claim 5 including a network response emulator responsive to the signalling to send an appropriate response.

7. An arrangement as claimed in claim 6, wherein the emulator is on the downstream side of the multiplexer arrangement.

8. An arrangement as claimed in any one of claim 5 to 7, wherein the multiplexer arrangement includes a multiplexer circuit, the buffer storing the signalling data prior to multiplexing.

9. An arrangement as claimed in any one of claims 5 to 8 including a controller controlling the multiplexer arrangement.

10. An arrangement for converting at least first and second signals to a common protocol, the first signal having a first protocol different from the common protocol, the arrangement including a multiplexer the second signal into a bit stream and incorporating the first signal into the bit stream carrying the second signal by bit robbing.

11. An arrangement as claimed in claim 10, wherein the second signal has a second protocol different from the common protocol and different from the first protocol, the arrangement including a second converter to convert the second signal to the common protocol.

12. An arrangement for converting signals as claimed in claim 9 or claim 10,
- including a network response emulator which emulates network responses to at least one of the signals.

13. A method of converting at least first and second signals to a common protocol, the first signal having a protocol different from the common protocol, the method including,
- multiplexing the second signal into a bit stream and
- incorporating the first signal into the bit stream carrying the second signal by bit-robbing.

14. A method of converting signals substantially as herein described with reference to the accompanying drawings.

15. An arrangement for converting signals substantially as herein described with reference to the accompanying drawings.

16. A service agile communication arrangement to make available a plurality of services to a customer's premises, the arrangement including:
- at the network access side of the customer's line, a network line interface adapted to transmit and receive information and signalling according to a chosen communication protocol;
- at the customer premises side of the line, a customer line interface adapted to transmit and receive information and signalling according to the chosen communication protocol;
- the customer line interface including means to convert between the information and signalling protocol of the service and the chosen communication protocol.

17. An arrangement as claimed in claim 16 wherein the network lines interface converts between the chosen protocol and a network protocol for communication with the network.

18. An arrangement as claimed 16 or claim 17 wherein the chosen protocol is the IDSL protocol (2B1Q).
